# EUROPEAN PATENT SPECIFICATION

(11) **EP 2 551 144 B1**
(45) Date of publication and mention of the grant of the patent: **16.03.2016**
(21) Application number: 10716551.6
(22) Date of filing: 22.03.2010
(51) Int. Cl.: B60L 11/18

(54) **CHARGING STATION FOR ELECTRIC VEHICLES AND CHARGING SYSTEM FOR SAID VEHICLES**
ESTACIÓN DE RECARGA DE VEHÍCULOS ELÉCTRICOS Y SISTEMA DE RECARGA DE DICHOS VEHÍCULOS
STATION DE RECHARGE DE VÉHICULES ÉLECTRIQUES ET SYSTÈME DE RECHARGE DE VÉHICULES ÉLECTRIQUES

(43) Date of publication of application: 30.01.2013
(73) Proprietor: Ingeteam Power Technology, S.A., 48170 Zamudio (Bizkaia) (ES)
(72) Inventor: ASÍN MUÑOA, Jon, E-31621 Sarriguren (ES); NICOLÁS HARO, Lesmes, E-31621 Sarriguren (ES)
(74) Representative: Carpintero Lopez, Francisco
(86) International application number: PCT/ES2010/070167
(87) International publication number: WO 2011/117430

(56) References cited:
- WO-A2-2007/141543
- WO-A2-2009/098687
- US-A1- 2008 203 973
- US-A1- 2010 013 433

## Description

### OBJECT OF THE INVENTION

The present invention belongs to the field of electric vehicles and, more specifically, to the recharging systems for said vehicles.

The main object of the invention is a recharging station, in addition to the system that manages the recharging of electric vehicles, wherethrough the recharging process thereof is considerably optimised, guaranteeing satisfactory safety and recharging conditions.

### BACKGROUND OF THE INVENTION

Electric vehicles have existed for just over one hundred years. Their energy efficiency is very superior to that of internal combustion vehicles, but their use has not become widespread mainly due to the low energy density of their batteries, which normally represent a heavy additional weight in the vehicle, with long recharging times and very limited autonomy compared to that of an internal combustion vehicle.

There are two main types of electric vehicles:
- Plug-in hybrid (PHEV - Plug-in Hybrid Electric Vehicles): equipped with a battery and an internal combustion engine.
- With battery (BEV - Battery Electric Vehicles): these do not have internal combustion engines, due to which the energy required for operation thereof is supplied from the power grid.

Electric vehicles are particularly interesting for use in urban environments as they do not produce local emissions. They can operate with alternating current electric motors or direct current electric motors. In turn, the electric energy required for use thereof can be generated in multiple manners, particularly highlighting the great synergy offered by the combination of electric energy from wind energy and recharging vehicle batteries during nighttime hours. During this period, the electricity demand is considerably lower and corresponds to the hours of greatest generation of wind energy.

The batteries of an electric vehicle are recharged at so-called recharging stations or recharging poles. These recharging stations consist of an electric energy outlet that allows electric energy to be transferred from the power grid to the vehicle.

GB2438979 discloses a recharging station for electric vehicles for public thoroughfares, with a single-phase outlet. For operation thereof, the user must have a RFID (Radio Frequency IDentification) card supplied by the operator of said stations.

For its part, international application WO2009/089249 discloses vehicle recharging stations that offer different types of LAN (Local Area Network) communications between these and a data control centre or payment station. With regard to the locking system, they have an electromechanical locking mechanism that is automatically released in the event of absence of power supply. As in the preceding case, access to the interior of the receptacle is limited to users of the infrastructure with valid identification means.

The current state of the art does not offer electric vehicle battery recharging stations adapted to the requirements imposed by the growth of electric vehicles as a means of transport in the near future. Optimal recharging conditions that satisfy both the user and the recharging infrastructure management company must be guaranteed, ensuring safe operation during the recharging process.

Document WO2007/141543 discloses a device according to the preamble of claim 1.

### DESCRIPTION OF THE INVENTION

The present invention resolves the aforementioned drawbacks by providing an electric vehicle recharging station that allows optimisation of the communications and methods wherethrough a person may carry out the recharging operation of his/her electric vehicle, guaranteeing the safe, reliable and efficient execution of the recharging process and preventing vandalic actions by third parties.

In accordance with a first object of the invention, the recharging station, of the type that comprises an electric energy connection connected to a local power source that feeds the recharging station and an electric energy outlet adapted for connection thereof to the vehicle that supplies electric energy to the vehicle, basically stands out for comprising:
- at least one switching device that enables or interrupts the power supply to the vehicle through the electric energy outlet,
- at least one intensity measuring device that measures the intensity that circulates through the electric energy outlet,
- at least one communications device that provides network communication capacity,
- at least one control unit that controls the switching device, controls the intensity measuring device and governs the transfer of energy between the vehicle and the local power source, which is connected to the communications device for the purpose of receiving and sending information to an external control centre,
- at least one envelope that includes at least one of the previously described elements and wherein said elements are accessed upon opening or extracting a single constituent element thereof,
- at least one locking system associated to the control unit that establishes an open position or closed position with the capacity of making the electric energy outlet accessible or non-accessible to the vehicle.

Preferably, the recharging station comprises means to prevent the extraction from the connector of a cable couplable to the electric energy outlet, when the cable is connected to the vehicle and the locking system is in its closed position. It is only at this moment, when the locking system is closed, that the transfer of electric energy between the vehicle and recharging station is enabled.

Likewise, the recharging station has also been envisaged to have an identification device for the communication between the user and the recharging station, which can be a card reader, a keyboard, a key, a biometric reader or any type of equipment with the technology that will allow the user to identify him/herself correctly.

Additionally, in a preferred embodiment, there can be a communications system between the recharging station and the vehicle.

In a preferred embodiment, the communications device installed in the recharging station is adapted for connection to an area network selected from among: a wide area network (WAN), a cable local area network (LAN), a wireless local area network (WLAN) and a combination thereof. Said device allows the simultaneous connection of different communication channels and protocols, both cable LAN or wireless WLAN and remote or WAN communications, cable or wireless.

In the event of absence of power supply, cutting off and affecting the internal operation of a recharging station, there is an auxiliary power system, for example, batteries, a capacitor bank, ultracapacity, uninterrupted power systems (UPS), or the like, wherethrough it is possible to:
- Keep the locking mechanism closed until intervention by an authorised user.
- Record the parameters that will allow the electric energy transfer process to continue once power is restored.

In said event of absence of power supply during a recharging process, the locking system remains closed until intervention by an authorised user. In a preferred embodiment, this user will be the same as that which started the recharging process.

Likewise, said control unit may record the electric energy transfer parameters during the recharging process if the power supply is cut off, using said parameters when the supply is restored.

In accordance with a preferred embodiment, the recharging station comprises a receptacle that houses the electric energy outlet and is designed for housing the cable connector in its entirety.

We propose the use of resettable thermal magnetic circuit breakers (such as for example, Residual Current Devices-RCD) as a system protection element, which are capable of automatically resetting themselves upon verifying the absence of defects in the installation.

The inclusion of a WAN communication device allows isolated stations to operate in autonomous mode or as part of a network.

Recharging stations can be grouped together in such a manner as to constitute a system wherein, directly or via a bridge, they can communicate with an external control centre through the communications devices of the recharging stations, via a communications network.

Said recharging system can establish a communications network such that it allows the recharging stations to operate in autonomous mode or as part of a network, whether through a local area network (LAN), a wireless local area network (WLAN), a wide area network (WAN) or any combination thereof.

The external control centre allows us to control the flow of electric energy supplied to the vehicle based on parameters such as: the energy available in the grid, price of the energy, CO2 content of the generation thereof and/or distribution network capacity.

We must point out that the system described herein envisages the possibility of allowing a user to reserve a certain recharging station by means of any device or mobile unit that allows sending of SMS messages or, for example, via the Internet.

It also envisages the possibility of allowing an occasional user who does not have an identification mechanism previously validated in the system to establish a remote communication with the external control centre.

### DESCRIPTION OF THE DRAWINGS

In order to complement this description and with the object of helping to better understand the characteristics of the invention, a set of drawings, in accordance with a preferred example of practical embodiment thereof, has been included as an integral part of said description, wherein the following has been represented in an illustrative and non-limiting manner:
Figure 1 shows a schematic view of the recharging system for electric vehicles in accordance with a preferred embodiment of the invention.
Figure 2 shows a general perspective view of the recharging station for electric vehicles in accordance with a preferred embodiment.

### PREFERRED EMBODIMENT OF THE INVENTION

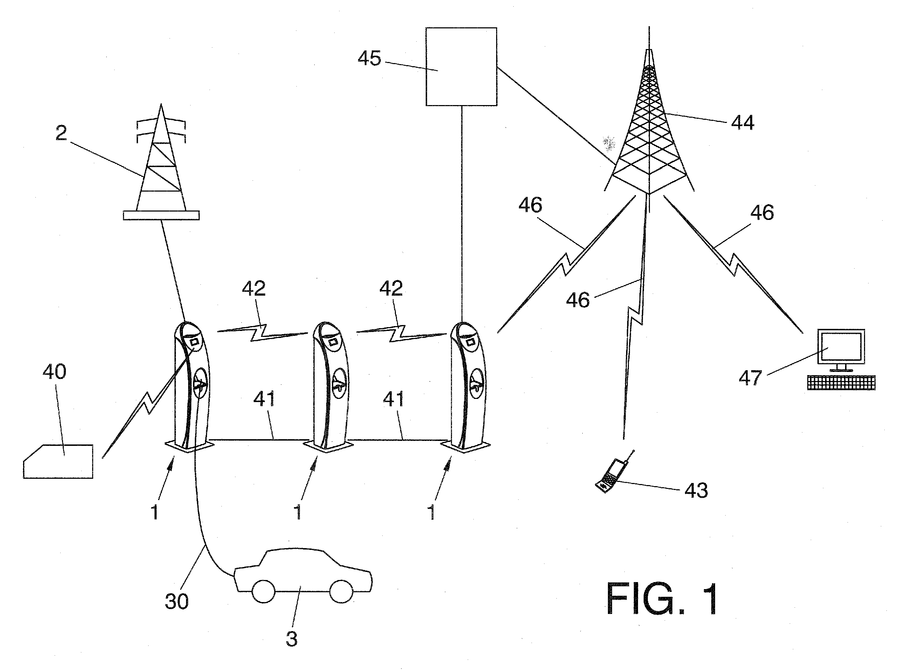

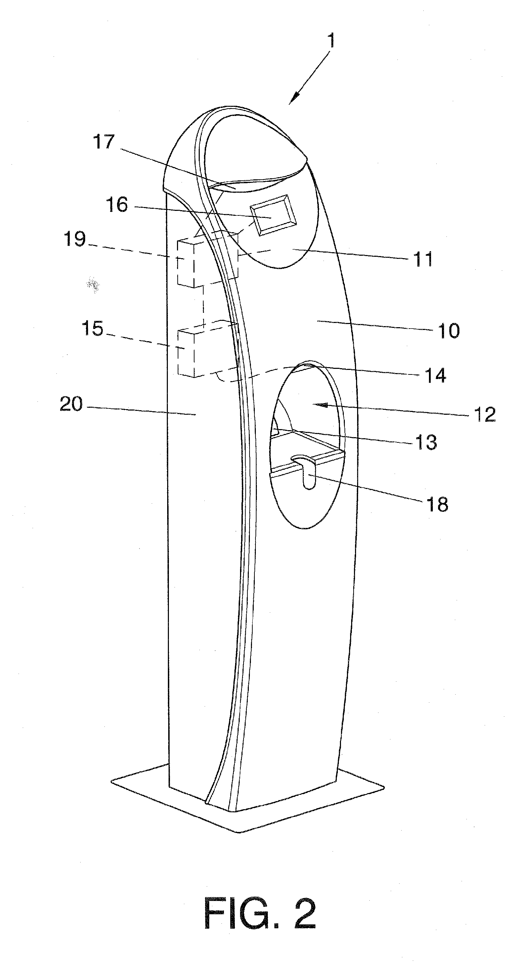

In accordance with a preferred embodiment, shown in figure 2, the recharging station (1) is formed by a front module (10), of a non-metallic material in order to allow communication by radiofrequency, with which a user interacts, and a metal envelope (20) that provides support and protection for the recharging station (1), comprising:
- an electric energy connection connected to a local power source (2), shown in figure 1, that feeds the recharging station (1),
- an electric energy outlet (13), housed in the interior of a receptacle or feeding area (12), adapted for connection to the vehicle (3) to supply it with electric energy, which can be direct current or alternating current,
- a switching device that enables or interrupts the power supply to the vehicle (3) through the electric energy outlet (13),
- an intensity measuring device that measures the intensity that circulates through the electric energy outlet (13),
- a communications device, shown in figure 1, that enables network communication,
- a control unit (19) that controls the switching device, the intensity measuring device and governs the transfer of energy between the vehicle (3) and the local power source (2), which is connected to the communications device for the purpose of receiving and sending information to an external control centre (45),
- an electromechanical locking system (15) associated with the control unit (19) that establishes an open or closed position with the capacity of making the electric energy outlet (13) accessible or non-accessible to the vehicle (3).

As can be observed in figure 2, the recharging station (1) also has an identification device (11) in its upper part for communication between the user and the recharging station (1), which in this specific embodiment is a RFID no-contact card reader.

Additionally, there may be a communications system between the recharging station and the electric vehicle.

Likewise, in the recharging station (1) of figure 2 we can observe an automatic sliding lid (14) inserted in the front module (10), which is initially closed, actuated by the automatic locking system (15) disposed in the interior of the recharging station (1), which allows said lid (14) to be opened once the user has been correctly identified and closed after connecting the cable (30) to the electric vehicle (3). In the closed position (lower position), an electromagnetic mechanism prevents transition thereof to the upper position, in turn preventing access to the electric energy outlet (13).

The cable (30) that connects the electric vehicle (3) and the recharging station (1) may stem from the interior of said recharging station (1) or be totally independent, each electric vehicle (3) having its own connection cable (30). We must also point out that the recharging stations (1) described herein allow the recharging of electric vehicles that run on both alternating current and direct current, for which purpose said recharging stations (1) have the necessary conversion devices.

Additionally, said figure 2 shows a screen (16) located on the upper part of the front module (10) and connected to the control unit (19), which shows the user information on the status of the recharging station (1), displaying messages such as "available", "recharging", "failure", or the like, as well as luminous signs (17) equally disposed on the upper part of the front module (10) and connected to the control unit (19), which alert the user of a change of status of the recharging station (1) (for example, by passing from a red light to a green light to indicate the change in the status of the recharging station (1) from "occupied" to "available").

When the sliding lid (14) is in the closed position, the connection cable (30) between the vehicle (3) and the recharging station (1) cannot be connected or disconnected. In this situation, an adequately dimensioned groove (18) allows passage of the connection cable (30) but not of its connector, which joins it to the electric energy outlet (13), thereby guaranteeing the user's safety during the transfer of energy, as well as preventing acts of vandalism.

In accordance with a second objective of the invention, the system for recharging electric vehicles (3) is shown in figure 1, which comprises:
- recharging stations (1) connected to each other through a local area network (LAN) (41) or a wireless local area network (WLAN) (42), wherethrough the transfer of energy in electric vehicles (3) is enabled,
- a local power source (2), connected to the recharging stations (1) for feeding thereof,
- an external control centre (45), associated to said recharging stations (1), adapted for managing and controlling the recharging process from start to finish, and
- a communications network (44), associated to the external control centre (45) which, through a wide area network (WAN) (46) allows a user to reserve a recharging station (1) from a mobile device (43), a computer (47) or similar electronic device that allows Internet access.

Said recharging stations (1) can also be integrated in a GSM/GPRS/UMTS mobile telephony network.

The external control centre (45) has a large database that contains information on all authorised users for using the recharging stations (1), taking control of recharging, sending and receiving messages to the recharging stations (1), pricing and payment methods, as well as any possible incident that could arise.

The adoption of international standards in relation to communication protocols and messages corresponding to each recharging session will allow the use of this system by users belonging to other systems and/or countries, whose data will be read by the recharging station (1) and sent to the external control centre (45). This will be in charge of establishing the external communications and validation to enable the vehicle (3) recharging operation and subsequent pricing thereof.

Preferably, the electric vehicle (3) recharging process is carried out as follows:
- the user is identified by placing their RFID card (40) over the identification device (11) and RFID card reader, which is installed in the front module (10) of the recharging station (1),
- the user's identification data contained in their RFID card (40) is sent from a control unit (19) disposed in the interior of the recharging station (1) to an external control centre (45), which can be carried out via a local area network (LAN) (41) or a wireless local area network (WLAN) (42). As a particular case, the data may be sent directly by means of a GSM/GPRS/UMTS modem that is inside the station or via a LAN or WLAN link with other recharging stations or additional equipment capable of establishing a direct connection with the control centre,
- the data received from the user's RFID card (40) is validated or rejected by the external control centre (45),
- if the RFID card (40) is rejected, the sliding lid (14) remains closed and locked without possibility of accessing the interior of the feeding area (12),
- if the RFID card (40) is validated, the external control centre (45) sends an authorisation message to the control unit (19) of the recharging station (1), said control unit (19) being connected to an automatic locking system (15) that opens the sliding lid (14) upwards, allowing the user to access the interior of the feeding area (12),
- connection of the cable (30) to the electric energy outlet (13) and by its other free end to the electric vehicle (3),
- closing and locking of the sliding lid (14) by means of the aforementioned automatic locking system (15); in this position, extraction of the cable (30) is not possible,
- confirmation by the user by means of a new reading of their RFID card (40) or after a specific period of time has elapsed,
- start of the transfer of electric energy through the cable (30) to recharge the battery of the electric vehicle (3),
- end of the transfer of electric energy,
- identification of the user by means of a final reading of their RFID card (40) in order to automatically open the sliding lid (14), thereby allowing the user to disconnect the cable (30) from the electric energy outlet (13).

During the recharging process, the intensity measuring device makes the necessary power and energy measurements for management thereof, sending periodic information to the external control centre (45). The instantaneous measurement of the power supplied allows detection of the end of the recharging process, in addition to any other abnormal situation (disconnection, failure, or the like) in order to react accordingly.

The reception of periodic information on the recharging process at the external control centre (45) allows adjustment of the recharging process parameters at the recharging station (1) with the same periodicity. To this end, recharging stations (1) have a communications system between the vehicle and the recharging station. For example, it must be pointed out that this communication can be via PLC (Power Line Communication), Bluetooth, Wireless, WIFI, or the like. In a preferred embodiment, the communications system can be formed, at least, by an electronic circuit that, pursuant to the regulations in force, forms part of the control unit (19), which modulates the pulse width of a square wave signal. This signal can be transmitted by means of a guide wire that forms part of the joining cable (30) between the recharging station (1) and the electric vehicle (3), in such a manner that the vehicle (3) reacts to changes in said signal, adapting these to the current intensity that it requests from the power grid at a given time. This allows adaptation of users' power demands to the existing supply at the recharging stations (1) at a given time.

When the recharging station (1) detects the end of the recharging process, the power supply to the electric vehicle (3) is interrupted. At that moment, the external control centre (45) is informed of the change in the status of the recharging station (1), which in turn informs the user via a SMS message

Additionally, upon completion of the recharging process the control unit (19) of the recharging station (1) sends the external control centre (45) the necessary information to calculate the price of the total energy transferred, in addition to the total duration of said transfer or other parameters, which are displayed on the screen (16) of the recharging station (1).

It should be pointed out that the external control centre (45) can interrupt the recharging process at any time during said recharging process by sending a message to the control unit (19) of the corresponding recharging station (1).

When the power supply is cut off during a recharging process, the locking system (15) remains closed until the same user that started the recharging session identifies him/herself again.

Validation of the RFID card (40) can be indicated to the user through a screen (16) and/or luminous signs (17) in the front module (10) of the recharging station (1).

Upon completion of the recharging process, the recharging station (1) remains with the sliding lid (14) in the closed position, until the user identifies him/herself again by means of a new reading of his/her RFID card (40).

This new RFID card (40) reading may be substituted for a SMS message sent to the external control centre (45). If necessary, the external control centre (45) is capable of informing the control unit (19) of the unlocking of the electromechanical locking system (15), which locks the sliding lid (14). The user can then release the connection cable (30) between the vehicle (3) and the recharging station (1).

On closing the sliding lid (14) once again, the recharging station (1) passes to the standby or available status, changing the colour of the luminous signs (17) and informing the external control centre (45) of the new status.

In the event of a power supply failure at a recharging station (1) the control unit (19) detects this event and changes the status of the recharging station (1) to one where the control system is fed by an auxiliary power system, based on batteries or other technology that forms part thereof. In this status, the recharging station (1) is capable of ensuring retention of the cable (30) until intervention by the user for an extended period of time after the supply failure.

Among the main constituent elements of the external control centre (45), we must highlight a group of servers that are in charge of maintaining the database updated with the user profiles; maintaining a portal that allows the creation of profiles and making reservations via the Internet; carrying out the necessary communications with the payment methods; indicating the status of the recharging stations (1) with sufficient periodicity; managing the vehicle (3) recharging processes, in addition to indications of malfunction or failures; and generating statistics for electricity companies and other official institutions (city councils, or the like).

Therefore, the existence of different user profiles, the possibility of regulating the power demand of the vehicles (3) with a latency of minutes, together with permanent communication with energy distribution companies, allows the vehicles (3) to be recharged in accordance with the different prices and quantity of power from different sources at each time.

## Claims

1. A recharging station (1) for electric vehicles that comprises:
at least one electric energy connection connected to a local power source (2) that feeds the recharging station (1),
at least one electric energy outlet (13) adapted for connection to the vehicle (3) that supplies electric energy to the vehicle (3),
at least one switching device that enables or interrupts the power supply to the vehicle (3) through the electric energy outlet (13),
at least one current measuring device that measures the current that circulates through the electric energy outlet (13),
at least one communications device that provides network communication capacity,
at least one control unit (19) that controls the switching device, controls the current measuring device and governs the transfer of energy between the vehicle (3) and the local power source (2), which is connected to the communications device for the purpose of receiving and sending information to an external control centre (45),
one envelope (20) that encloses at least one of the previously described elements and wherein said elements are accessed upon opening or extracting a single constituent element thereof, and
**characterised by** an auxiliary power system.

2. Recharging station (1) for electric vehicles, according to claim 1, **characterised in that** it comprises at least one locking system (15) associated with the control unit (19) that establishes an open position or closed position and is capable of making the electric energy outlet (13) accessible or non-accessible to the vehicle (3).

3. Recharging station (1) for electric vehicles, according to claims 1 and 2, **characterised in that** it comprises means that prevent the extraction from the connector of a cable (30) couplable to the electric energy outlet (13), when the cable (30) is connected to the vehicle (3) and the locking system (15) is in the closed position.

4. Recharging station (1) for electric vehicles, according to claim 1, **characterised in that** it also comprises an identification device (11) for communication between the user and the recharging station (1).

5. Recharging station (1) for electric vehicles, according to claim 4, **characterised in that** the user identification device (11) is a no-contact card or mobile equipment reader equipped with user identification technology.

6. Recharging station (1) for electric vehicles, according to claim 1, **characterised in that** it also comprises a communication system between the recharging station (1) and the vehicle (3).

7. Recharging station (1) for electric vehicles, according to claim 1, **characterised in that** the communications device is adapted for connection thereof to a network area selected from among a wide area network (WAN), a cable local area network (LAN), a wireless local area network (WLAN) and a combination thereof.

8. Recharging station (1) for electric vehicles, according to claim 1, **characterised in that** the communications device is adapted to simultaneously connect different communication channels and protocols, both cable LAN or wireless WLAN and remote or WAN communications, cable or wireless.

9. Recharging station (1) for electric vehicles, according to claims 1 and 3, **characterised in that** it comprises a receptacle (12) that houses the electric energy outlet (13) and which is designed for housing the cable (30) connector in its entirety.

10. Recharging station (1) for electric vehicles, according to claim 1, **characterised in that** it comprises resettable thermal magnetic circuit breaker-type protection and/or of the circuit breaker-type protection of the Residual Current Device (RCD) type, which are capable of automatically resetting themselves upon verifying the absence of defects in the installation.

11. Method for operating the recharging station (1) described in any one of claims 2 to 10, **characterised in that** if the power supply is cut off during the recharging process the locking system (15) remains closed until intervention by an authorised user, and the control unit (19) records the energy transfer parameters during the recharge when the power supply is cut off, using said parameters when the supply is restored.

12. System for recharging electric vehicles, **characterised in that** it comprises at least one recharging station (1) described in any one of claims 1 to 10 and also comprises:
an external control centre (45) connected to the communications devices of the recharging stations (1) via a communications network (44).

13. A method for operating the system for recharging electric vehicles described in claim 12, **characterised in that** the communications network (44) is used to manage each recharge process, the start and end thereof.

14. A method for operating the system for recharging electric vehicles described in claim 12, **characterised in that** the external control centre (45) controls the flow of the electricity supplied to the vehicle (3), based on parameters related to the energy available in the grid, price of the energy and CO2 content of the generation thereof and capacity of the distribution network, among others, and **in that** said external control centre (45) further allows the locking system (15) to be released.

15. A method for operating the system for recharging electric vehicles described in claim 14, **characterised in that** the external control centre (45) controls the reservation and use of a certain recharging station (1), upon reception of SMS messages or other types of informative messages, or via the Internet.

## Patentansprüche

1. Ladestation (1) für Elektrofahrzeuge, die umfasst:
mindestens eine Elektroenergieverbindung, die mit einer lokalen Energiequelle (2) verbunden ist, die die Ladestation (1) speist,
mindestens einen zur Verbindung mit dem Fahrzeug (3) angepassten Elektroenergieauslass (13), der Elektroenergie zum Fahrzeug (3) zuführt,
mindestens eine Schaltvorrichtung, die die Energiezufuhr zum Fahrzeug (3) durch den Elektroenergieauslass (13) zulässt oder unterbricht,
mindestens eine Strommessvorrichtung, die den Strom misst, der durch den Elektroenergieauslass (13) zirkuliert,
mindestens eine Kommunikationsvorrichtung, die ein Netz-Kommunikationsvermögen bereitstellt,
mindestens eine Steuereinheit (19), die die Schaltvorrichtung steuert, die Strommessvorrichtung steuert und die Energieübertragung zwischen dem Fahrzeug (3) und der lokalen Energiequelle (2) steuert, welche zum Zweck des Empfangens und Sendens von Informationen zu einer externen Steuerzentrale (45) mit der Kommunikationsvorrichtung verbunden ist,
eine Hülle (20), die mindestens eines von den zuvor beschriebenen Elementen umschließt und wobei beim Öffnen oder Entnehmen eines einzelnen Elementbestandteils derselben auf die Elemente zugegriffen wird, und
**gekennzeichnet durch** ein Hilfsenergiesystem.

2. Ladestation (1) für Elektrofahrzeuge nach Anspruch 1, **dadurch gekennzeichnet, dass** sie mindestens ein mit der Steuereinheit (19) verbundenes Verriegelungssystem (15) umfasst, das eine Offen-Stellung oder Geschlossen-Stellung herstellt und imstande ist, den Elektroenergieauslass (13) für das Fahrzeug zugänglich oder nicht-zugänglich zu machen.

3. Ladestation (1) für Elektrofahrzeuge nach den Ansprüchen 1 und 2, **dadurch gekennzeichnet, dass** sie Mittel umfasst, die die Entnahme eines mit dem Elektroenergieanschluss (13) kuppelbaren Kabels (30) aus dem Verbinder verhindert, wenn das Kabel (30) mit dem Fahrzeug (3) verbunden ist und sich das Verriegelungssystem (15) in der Geschlossen-Stellung befindet.

4. Ladestation (1) für Elektrofahrzeuge nach Anspruch 1, **dadurch gekennzeichnet, dass** sie auch eine Identifizierungsvorrichtung (11) zur Kommunikation zwischen dem Benutzer und der Ladestation (1) umfasst.

5. Ladestation (1) für Elektrofahrzeuge nach Anspruch 4, **dadurch gekennzeichnet, dass** die Benutzer-Identifizierungsvorrichtung (11) eine mit Benutzer-Identifizierungstechnologie ausgestattete kontaktlose Karte oder Mobilgerät-Leseeinrichtung ist.

6. Ladestation (1) für Elektrofahrzeuge nach Anspruch 1, **dadurch gekennzeichnet, dass** sie auch ein Kommunikationssystem zwischen der Ladestation (1) und dem Fahrzeug (3) umfasst.

7. Ladestation (1) für Elektrofahrzeuge nach Anspruch 1, **dadurch gekennzeichnet, dass** die Kommunikationsvorrichtung zum Verbinden derselben mit einem Netzbereich angepasst ist, der unter einen Wide Area Network (WAN), einem kabelgebundenen Local Area Network (LAN) und einem kabellosen Local Area Network (WLAN) und einer Kombination derselben ausgewählt ist.

8. Ladestation (1) für Elektrofahrzeuge nach Anspruch 1, **dadurch gekennzeichnet, dass** die Kommunikationsvorrichtung angepasst ist, um gleichzeitig verschiedene Kommunikationskanäle und -protokolle zu verbinden, sowohl Kabel-LAN oder kabelloses WLAN und Fern- oder WAN-Verbindungen, per Kabel oder kabellos.

9. Ladestation (1) für Elektrofahrzeuge nach den Ansprüchen 1 und 3, **dadurch gekennzeichnet, dass** sie eine Aufnahme (12) umfasst, die den Elektroenergieauslass (13) beherbergt und die ausgebildet ist, um den Kabel(30)-Verbinder in seiner Gesamtheit zu beherbergen.

10. Ladestation (1) für Elektrofahrzeuge nach Anspruch 1, **dadurch gekennzeichnet, dass** sie einen rücksetzbaren Schutz vom Typ eines thermisch-magnetischen Stromkreisunterbrechers und/oder Schutz vom Typ eines Stromkreisunterbrechers vom Typ Reststromvorrichtung (RCD) umfasst, die imstande sind, sich bei Bestätigung des Fehlens von Defekten in der Einrichtung selbst zurückzusetzen.

11. Verfahren zum Betreiben der in einem der Ansprüche 2 bis 10 beschriebenen Ladestation, **dadurch gekennzeichnet, dass** wenn die Energiezufuhr während des Ladevorgangs unterbrochen wird, das Verriegelungssystem (15) bis zum Eingriff durch einen befugten Benutzer geschlossen bleibt und die Steuereinheit (19) die Energieübertragungsparameter während der Aufladung bei einer Unterbrechung der Energiezufuhr aufzeichnet, wobei die besagten Parameter verwendet werden, wenn die Zufuhr wiederhergestellt wird.

12. System zum Aufladen von Elektrofahrzeugen, **dadurch gekennzeichnet, dass** es mindestens eine in einem der Ansprüche 1 bis 10 beschriebene Ladestation (1) umfasst und auch umfasst:
eine externe Steuerzentrale (45), die mit den Kommunikationsvorrichtungen der Ladestationen (1) über ein Kommunikationsnetz (44) verbunden ist.

13. Verfahren zum Betreiben des in Anspruch 12 beschriebenen Systems zum Aufladen von Elektrofahrzeugen, **dadurch gekennzeichnet, dass** das Kommunikationsnetz (44) verwendet wird, um jeden Ladevorgang, seinen Beginn und sein Ende, zu verwalten.

14. Verfahren zum Betreiben des in Anspruch 12 beschriebenen Systems zum Laden von Elektrofahrzeugen, **dadurch gekennzeichnet, dass** die externe Steuerzentrale (45) den Fluss der Elektrizität steuert, die zum Fahrzeug (3) zugeführt wird, basierend auf Parametern, die unter anderem mit der im Netz verfügbaren Energie, dem Preis der Energie und dem CO₂-Gehalt ihrer Erzeugung sowie der Kapazität des Verteilungsnetzes in Beziehung stehen, und dass es die externe Steuerzentrale (45) weiter gestattet, das Verriegelungssystem (15) freizugeben.

15. Verfahren zum Betreiben des in Anspruch 14 beschriebenen Systems zum Aufladen von Elektrofahrzeugen, **dadurch gekennzeichnet, dass** die externe Steuerzentrale (45) die Reservierung und Verwendung einer gewissen Ladestation (1) auf den Empfang von SMS-Nachrichten oder andere Arten von informativen Nachrichten hin, oder über das Internet, steuert.

## Revendications

1. Station de recharge (1) pour des véhicules électriques, qui comporte :
au moins une connexion d'énergie électrique connectée à une source d'alimentation électrique locale (2) qui alimente la station de recharge (1),
au moins une sortie d'énergie électrique (13) adaptée pour connexion au véhicule (3), qui alimente de l'énergie électrique vers le véhicule (3),
au moins un dispositif de commutation qui autorise ou interrompt l'alimentation électrique vers le véhicule (3) à travers la sortie d'énergie électrique (13),
au moins un dispositif de mesure de courant qui mesure le courant qui circule à travers la sortie d'énergie électrique (13),
au moins un dispositif de communication qui fournit une capacité de communication réseau,
au moins une unité de commande (19) qui commande le dispositif de commutation, commande le dispositif de mesure de courant et gère le transfert d'énergie entre le véhicule (3) et la source d'alimentation électrique locale (2), qui est connectée au dispositif de communication dans le but de recevoir et d'envoyer des informations à un centre de commande externe (45),
une enveloppe (20) qui renferme au moins l'un des éléments décrits précédemment, et dans lequel lesdits éléments sont accessibles lors de l'ouverture ou de l'extraction d'un élément constitutif unique de ceux-ci, et
**caractérisée par** un système d'alimentation électrique auxiliaire.

2. Station de recharge (1) pour des véhicules électriques selon la revendication 1, **caractérisée en ce qu'**elle comporte au moins un système de verrouillage (15) associé à l'unité de commande (19), qui établit une position ouverte ou une position fermée, et qui est capable de rendre la sortie d'énergie électrique (13) accessible ou non accessible pour le véhicule (3).

3. Station de recharge (1) pour des véhicules électriques selon les revendications 1 et 2, **caractérisée en ce qu'**elle comprend des moyens qui empêchent l'extraction à partir du connecteur d'un câble (30) pouvant être couplé à la sortie d'énergie électrique (13), lorsque le câble (30) est connecté au véhicule (3) et le système de verrouillage (15) est dans la position fermée.

4. Station de recharge (1) pour des véhicules électriques, selon la revendication 1, **caractérisée en ce qu'**elle comprend également un dispositif d'identification (11) pour communication entre l'utilisateur et la station de recharge (1).

5. Station de recharge (1) pour des véhicules électriques, selon la revendication 4, **caractérisée en ce que** le dispositif d'identification d'utilisateur (11) est un lecteur de carte ou d'équipement mobile sans contact muni d'une technologie d'identification d'utilisateur.

6. Station de recharge (1) pour des véhicules électriques, selon la revendication 1, **caractérisée en ce qu'**elle comprend également un système de communication entre la station de recharge (1) et le véhicule (3).

7. Station de recharge (1) pour des véhicules électriques, selon la revendication 1, **caractérisée en ce que** le dispositif de communication est adapté pour une connexion de celui-ci à une zone de réseau parmi un réseau étendu (WAN), un réseau local à câble (LAN), un réseau local sans fil (WLAN) et une combinaison de ceux-ci.

8. Station de recharge (1) pour des véhicules électriques, selon la revendication 1, **caractérisée en ce que** le dispositif de communication est adapté pour être connecté simultanément à différents canaux et protocoles de communication, à la fois des communications par LAN à câble ou par WLAN sans fil et à distance ou par WAN, à câble ou sans fil.

9. Station de recharge (1) pour des véhicules électriques, selon les revendications 1 et 3, **caractérisée en ce qu'**elle comprend un réceptacle (12) qui reçoit la sortie d'énergie électrique (13) et qui est conçu pour recevoir le connecteur de câble (30) dans sa totalité.

10. Station de recharge (1) pour des véhicules électriques selon la revendication 1, **caractérisée en ce qu'**elle comprend une protection du type disjoncteur magnétothermique réinitialisable et/ou la protection du type disjoncteur de circuit du type à courant résiduel (RCD), capables de se réinitialiser automatiquement elles-mêmes après avoir vérifié l'absence de défaut dans l'installation.

11. Procédé pour faire fonctionner la station de recharge (1) décrite dans l'une quelconque des revendications 2 à 10, **caractérisé en ce que** si l'alimentation électrique est coupée pendant le processus de recharge, le système de verrouillage (15) reste fermé jusqu'à l'intervention d'un utilisateur autorisé, et l'unité de commande (19) enregistre les paramètres de transfert d'énergie durant la recharge lorsque l'alimentation électrique est coupée, en utilisant lesdits paramètres lorsque l'alimentation est restaurée.

12. Système de recharge de véhicules électriques, **caractérisé en ce qu'**il comporte au moins une station de recharge (1) décrite dans l'une quelconque des revendications 1 à 10, et **en ce qu'**il comprend également :
un centre de commande externe (45) relié aux dispositifs de communication des stations de recharge (1) via un réseau de communication (44).

13. Procédé pour faire fonctionner le système de recharge de véhicules électriques selon la revendication 12, **caractérisé en ce que** le réseau de communication (44) est utilisé pour gérer chaque processus de recharge, leur début et leur fin.

14. Procédé pour faire fonctionner le système de recharge de véhicules électriques selon la revendication 12, **caractérisé en ce que** le centre de commande externe (45) commande le flux d'électricité alimenté vers le véhicule (3) sur la base de paramètres concernant la disponibilité de l'énergie dans le réseau électrique, le prix de l'énergie et la teneur en CO2 de la réalisation de celle-ci et la capacité du réseau de distribution, parmi d'autres, et **en ce que** le centre de commande externe (45) permet de plus que le système de verrouillage (15) soit relâché.

15. Procédé pour faire fonctionner le système de recharge de véhicules électriques décrit dans la revendication 14, **caractérisé en ce que** le centre de commande externe (45) commande la réservation et l'utilisation d'une certaine station de recharge (1) lors de la réception de messages du type SMS ou d'autres types de messages d'information, ou via Internet.
